# EUROPEAN PATENT APPLICATION

(11) **EP 4 575 731 A1**
(43) Date of publication of application: **25.06.2025**
(21) Application number: 24151264.9
(22) Date of filing: 11.01.2024
(51) Int. Cl.: G06F 3/0354

(54) **ACTIVE CAPACITIVE PEN WITH MAGNETIC RAIL CAP**

(30) Priority: 21.12.2023 CN 202311774822
(71) Applicant: Lianping Gaoxun Technology Development Co., Ltd, Zhongxin, Lianping County, Guangdong 517139 (CN)
(72) Inventor: Yu, Lijian, Heyuan, 517139 (CN)
(74) Representative: JD&P Patent Attorneys Joanna Dargiewicz & Partners

(57) **Abstract**

An active capacitive pen with magnetic rail cap includes a penholder, with a pen tip at one end and a seat at the other end away from the pen tip. The penholder houses multiple brackets and auxiliary brackets. A circuit board is securely positioned in the middle segment of the bracket to align with the auxiliary bracket. One end of the circuit board connects to the charging seat, and the other end connects to the battery trough, which is affixed to the primary bracket. An induction coil is situated on the circuit board, adjacent to the main bracket, with a magnet trough in close proximity. The magnet trough accommodates a magnet set. A touch induction needle is positioned on the circuit board, and an induction part corresponds to the touch induction needle's location. A shielding layer surrounds both the main bracket and auxiliary bracket.

## Description

### Technical field

This invention involves the technical field of capacitive pen, and it concretely involves the improvement to a kind of active capacitive pen.

### Background of the Disclosure

Capacitive pen is a kind of pen that is made of conductive material, it has the characteristics of conduction and is used for touching to control capacitive screen, so as to finish operation of human-computer dialogue, and capacitive pen is a kind of auxiliary device for finishing human-computer dialogue through simulating human body by conductive material. With the development of APP, the current capacitive pen does not simply substitute the operating function of finger, and more and more specialized personnels try to work on mobile equipment by active capacitive pen.

Users become more and more familiar with active capacitive pen, and their requirements to appearance of pen get higher and higher, some people consider that exposed charging port is not so good-looking, it is inappropriate to simply cover it, separated cap could be easily lost, and the experience of pulling feel is poor.

In order to meet the requirements of clients for solving the above problems, a kind of active capacitive pen with magnetic rail cap is introduced.

### Summary of the Disclosure

### (1) Technical problems solved

Aimed at the shortcoming of existing technique, this invention provides a kind of active capacitive pen with magnetic rail cap, which can cover the charging port while effectively taking into consideration its appearance, magnetic slide rail is adopted to greatly improve the operating feel, and it further solves the problem of not so good-looking exposed charging port, it is inappropriate to simply cover it, separated cap could be easily lost, and the experience of pulling feel is poor.

### (2) Technical scheme

In order to realize covering the charging port while effectively taking into consideration its appearance, magnetic slide rail is adopted, it has the advantage of greatly improving the operating feel, and the concrete technical scheme adopted in this invention is as follows:
A kind of active capacitive pen with magnetic rail cap, it includes penholder, there is pen tip at the end of the said penholder, there is charging seat at the other end of the penholder that is far from the pen tip, there are main bracket and auxiliary bracket in the said penholder, a circuit board is fixed at the middle segment of the main bracket to match with the auxiliary bracket, one end of the circuit board is linked with the charging seat, the other end of the circuit board is linked with battery trough, which is mounted on the main bracket, there is induction coil on the said circuit board that is close to the main bracket, there is magnet trough at that position that is close to the induction coil, magnet set is installed in the magnet trough, there is touch induction needle on the circuit board, there is induction part at the position that corresponds to the said touch induction needle, and there is shielding layer outside the said main bracket and auxiliary bracket.

Further, there is cartridge assembly in the said pen tip, the said cartridge assembly includes cartridge, upper cover of cartridge, lower cover of cartridge and cartridge FPC board. The said lower cover of cartridge is set at the front end of main bracket, the upper cover of cartridge and lower cover of cartridge are linked by matching to fix the cartridge, the line pins on the said cartridge FPC board are all electrically connected with the ground wire, first level signal line and second level signal line, and the exterior of the said upper cover of cartridge and lower cover of cartridge is fixed with the shielding tube through thread.

Further, there are charging seat, guide rail part and protecting crust at the tail of the said main bracket, the said charging seat is interspersed to be fixed into the installation trough of the main bracket, there is tailstock FPC board at the said charging seat, the said tailstock FPC board is electrically connected with the circuit board through pin, the said protecting crust covers onto the terminal exterior of the main bracket, the said protecting crust is fixed to the main bracket through screw, there are two guide rails for the said guide rail part, they penetrates through the hole corresponding to one end of the protecting crust respectively, and they are hooked with the inner step of the protecting crust through the barb at the end of the guide rail part.

Further, the said magnet set includes magnet a and magnet b, the said magnet a is set into the end groove of the main bracket, the two said magnets b are respectively set into the root of the guide rail part, and they are located in the same horizontal plane as magnet a but their magnetism repels each other.

Further, there is buffer cushion between the protecting crust and guide rail part, and crust cap covers the exterior of the said guide rail part.

Further, there is battery in the said battery trough, there is rectangular hole below the said battery trough, and there is iron block in the rectangular hole.

### (3) Advantageous effect

Compared with existing technique, this invention provides a kind of active capacitive pen with magnetic rail cap, and it has the following advantageous effect:
There are charging seat, guide rail part and protecting crust at the tail of the main bracket, the said charging seat is interspersed to be fixed into the installation trough of the main bracket, there is tailstock FPC board at the charging seat, the tailstock FPC board is electrically connected with the circuit board through pin, the said protecting crust covers onto the terminal exterior of the main bracket, the protecting crust is fixed to the main bracket through screw, there are two guide rails for the guide rail part, they penetrate through the hole corresponding to one end of the protecting crust respectively, and they are hooked with the inner step of the protecting crust through the barb at the end of the guide rail part, so as to realize covering the charging port while effectively taking into consideration its appearance, magnetic slide rail is adopted, so that it has the advantage of greatly improving the operating feel, and it further solves the problems of exposed charging port being not good-looking, simply covering being inappropriate, separated cap being prone to loss and experience of pulling feel being poor.

### Brief Description of the Disclosure

In order to more clearly illustrate the technical scheme in the example of this invention or existing technique, the patent drawings that need to be used in the example are then briefly introduced, the patent drawings described hereunder are obviously only some examples of this invention, and for ordinary technical personnel in this domain, on the prerequisite of not performing creative labor, other drawings can be obtained according to these patent drawings.
Fig. 1 is the schematic diagram for structure of this invention;
Fig. 2 is the schematic diagram for internal structure of this invention;
Fig. 3 is the schematic diagram for structure of main bracket 4 in this invention;
Fig. 4 is the schematic diagram for internal structure of main bracket 4 in this invention.

Where: penholder 1, pen tip 2, charging seat 3, main bracket 4, auxiliary bracket 5, circuit board 6, induction coil 7, shielding layer 8, cartridge assembly 9, battery trough 10, touch induction needle 61, induction part 62, cartridge 91, upper cover of cartridge 92, lower cover of cartridge 93, cartridge FPC board 94, shielding tube 95, charging seat 41, guide rail part 42, magnet a43, magnet b44, protecting crust 45, crust cap 46, iron block 11, magnet set 12.

### Detailed Description of the Disclosure

In order to further illustrate each example, this invention provides patent drawings, which are a part of the contents disclosed in this invention, they are mainly used for illustrating the example, and they can match with relevant description in the specification to explain the operation principle of example, by referencing those contents through matching, ordinary technical personnel of this domain should be capable of understanding other possible modes of carrying out and the advantages of this invention, the assemblies in drawings are not drawn in proportion, and similar assembly symbols are usually used for showing similar assemblies.

According to the examples of this invention, a kind of active capacitive pen with magnetic rail cap is provided.

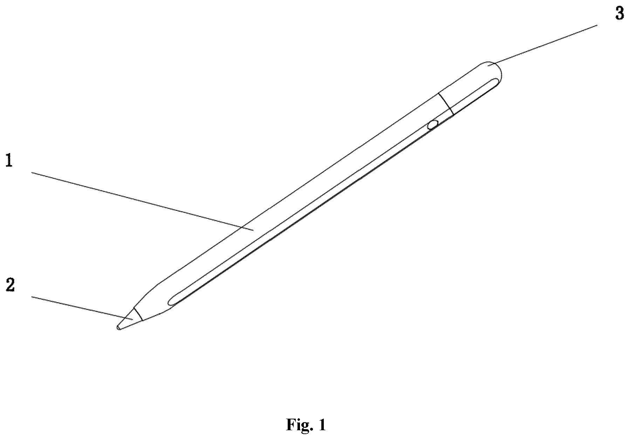

Combined with the patent drawing and description of the preferred embodiments, this invention is further illustrated, as shown in Fig. 1-4, according to a kind of active capacitive pen with magnetic rail cap in the example of this invention, it includes penholder 1, the material of penholder 1 is plastic or other nonmetallic or non-conductive material, there is pen tip 2 at end of the said penholder 1, there is charging seat 3 at the other end of the penholder 1 that is far from the pen tip 2, there are main bracket 4 and auxiliary bracket 5 in the penholder 1, a circuit board 6 is fixed at the middle segment of the main bracket 4 to match with the auxiliary bracket 5, one end of the circuit board 6 is linked with the charging seat 3, the other end of the circuit board 6 is linked with battery trough 10, which is mounted on the main bracket 4, there is induction coil 7 on the circuit board 6 that is close to the main bracket 4, there is magnet trough at that position that is close to the induction coil 7, magnet set 12 is installed in the magnet trough, there is touch induction needle 61 on the circuit board 6, there is induction part 62 at the position that corresponds to the touch induction needle 61, and there is shielding layer 8 outside the main bracket 4 and auxiliary bracket 5.

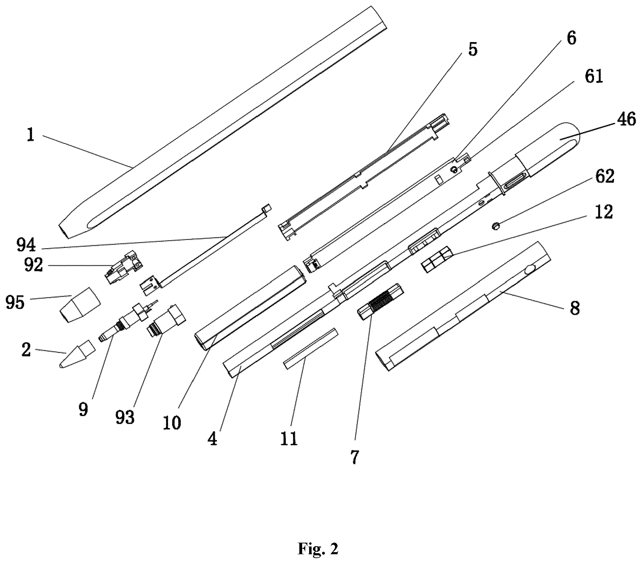

As shown in Fig.2, it is a kind of optimal embodiment of this invention, there is cartridge assembly 9 in the said pen tip 2, the said cartridge assembly 9 includes cartridge 91, upper cover of cartridge 92, lower cover of cartridge 93 and cartridge FPC board 94, the said lower cover of cartridge 93 is set at the front end of the main bracket 4, the upper cover of cartridge 92 and lower cover of cartridge 93 are linked by matching to fix the cartridge 91, and the line pins on the said cartridge FPC board 94 are all electrically connected with the ground wire, first level signal line and second level signal line. Such an active capacitive pen is charged by magnetic wireless charging, the technical requirements for charging by adsorption on IPAD is simplified, its factory cost is greatly lowered, and more options are offered to users, and there is shielding tube 95 fixed to the upper cover of cartridge 92 and lower cover of cartridge 93 through thread.

As shown in Fig.2, Fig.3 and Fig.4, it is a kind of optimal embodiment of this invention, there are charging seat 41, guide rail part 42 and protecting crust 45 at the tail of the said main bracket 4, the said charging seat 41 is interspersed to be fixed into the installation trough of the main bracket 4, there is tailstock FPC board 411 at the said charging seat 41, the said tailstock FPC board 411 is electrically connected with the circuit board 6 through pin, the said protecting crust 45 covers onto the terminal exterior of the main bracket 4, the said protecting crust 45 is fixed to the main bracket 4 through screw, there are two guide rails for the said guide rail part 42, they penetrate through the hole corresponding to one end of the protecting crust 45 respectively, and they are hooked with the inner step of the protecting crust 45 through the barb at the end of the guide rail part 42.

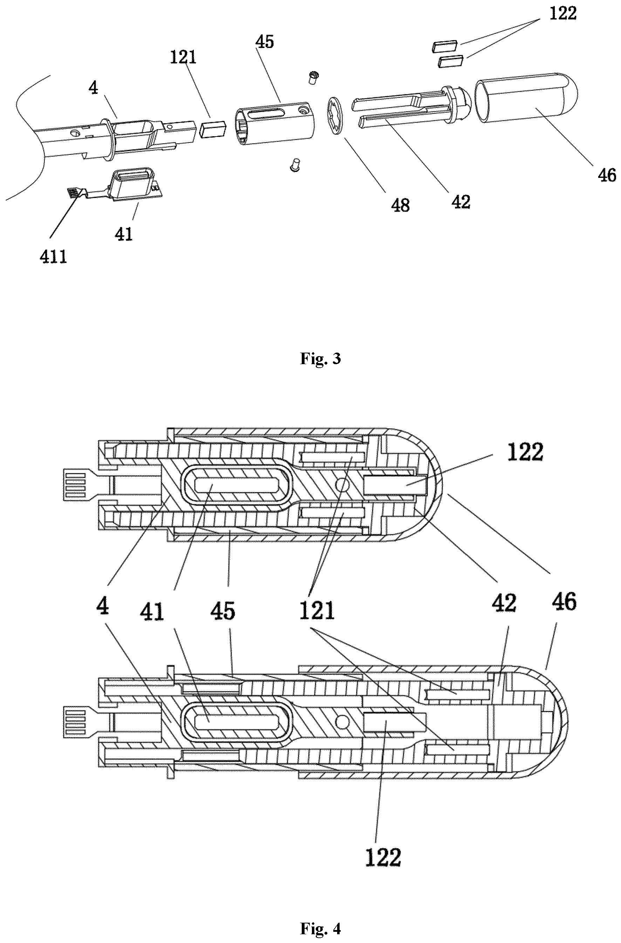

As shown in Fig.3 and Fig.4, it is a kind of optimal embodiment of this invention, the said magnet set 12 includes magnet a121 and magnet b122, the said magnet a121 is set into the end groove of the main bracket 4, the two said magnets b 122 are respectively set into the root of the guide rail part42, and they are located in the same horizontal plane as magnet a121 but their magnetism repels each other. The magnet set that is set facilitates the capacitive pen to be adsorbed onto different equipment.

As shown in Fig.3, it is a kind of optimal embodiment of this invention, there is buffer cushion between the protecting crust 45 and guide rail part 42, and crust cap 46 covers the exterior of the said guide rail part 42.

As shown in Fig.3, it is a kind of optimal example of this invention, there is battery in the said battery trough 10, the battery is electrically connected with circuit board 6, there is rectangular hole below the said battery trough 10, and there is iron block 11 in the rectangular hole.

Working principle: the charging seat 41 is interspersed to be fixed into the installation trough of the main bracket 4, there is tailstock FPC board 411 at the charging seat 41, the said tailstock FPC board 411 is electrically connected with the circuit board 6 through pin, the said protecting crust 45 covers onto the terminal exterior of the main bracket 4, the protecting crust 45 is fixed to the main bracket 4 through screw, there are two guide rails for the said guide rail part 42, they penetrate through the hole corresponding to one end of the protecting crust 45 respectively, and they are hooked with the inner step of the protecting crust 45 through the barb at the end of the guide rail part 42. It realizes covering the charging port while effectively taking into consideration the appearance, magnetic slide rail is adopted, it has the advantage of greatly improving the operating feel, and it further solves the problems of exposed charging port being not so good-looking, simple covering being inappropriate, separated cap being prone to loss and the experience of pulling feel being poor.

Except separately and explicitly stipulated and restricted, the terminologies in this invention, including "installation", "setting", "connection", "fixing" and "rotary splicing" should be broadly understood, for example, it can be either permanent connection or detachable connection or being an integral whole; it can be either mechanical connection or electrical connection; it can be either direct connection or indirect connection through intermediate medium, it can be either the connection inside two elements or mutual interactive relationship between two elements, and except separately and explicitly restricted, for ordinary technical personnel in this domain, concrete meaning of the above terminologies in this invention can be understood according to concrete circumstances.

The above are only relatively good example of this invention, they are not used for restricting this invention, and any modification, equivalent substitution and improvement (etc.) made within the spirit and principle of this invention should all be included in the scope of protection of this invention.

## Claims

1. An active capacitive pen with magnetic rail cap, comprising a penholder (1), and there is pen tip (2) at the end of the said penholder(1), which is **characterized by**: there is charging seat (3) at the other end of the penholder (1) that is far from the pen tip (2), there are main bracket (4) and auxiliary bracket (5) in the said penholder (1), a circuit board (6) is fixed at the middle segment of the main bracket (4) to match with the auxiliary bracket (5), one end of the circuit board (6) is linked with the charging seat (3), there are charging seat (41), guide rail part (42) and protecting crust (45) at the tail of the said main bracket (4), the said charging seat (41) is interspersed to be fixed into the installation trough of the main bracket (4), there is tailstock FPC board (411) at the said charging seat (41), the said tailstock FPC board (411) is electrically connected with the circuit board (6) through pin, the said protecting crust (45) covers onto the terminal exterior of the main bracket (4), the said protecting crust (45) is fixed to the main bracket (4) through screw, there are two guide rails for the said guide rail part (42), they penetrates through the hole corresponding to one end of the protecting crust (45) respectively, and they are hooked with the inner step of the protecting crust (45) through the barb at the end of the guide rail part (42).

2. The active capacitive pen with magnetic rail cap said according to claim 1, **characterized in that** there is cartridge assembly (9) in the said pen tip (2), the said cartridge assembly (9) includes cartridge (91), upper cover of cartridge (92), lower cover of cartridge (93) and cartridge FPC board (94). The said lower cover of cartridge (93) is set at the front end of main bracket (4), the upper cover of cartridge (92) and lower cover of cartridge (93) are linked by matching to fix the cartridge (91), and the line pins on the said cartridge FPC board (94) are all electrically connected with the ground wire, first level signal line and second level signal line.

3. The active capacitive pen with magnetic rail cap said according to claim 2, **characterized in that** the exteriors of the said upper cover of cartridge (92) and lower cover of cartridge (93) are fixed with shielding tube (95) through thread.

4. The active capacitive pen with magnetic rail cap said according to claim 1, **characterized in that** the other end of the said circuit board (6) is connected with battery trough (10), which (10) is mounted onto the main bracket (4), there is induction coil (7) for the said circuit board (6) where is close to the main bracket, there is magnet trough at the position where is close to the induction coil (7), magnet set (12) is mounted in the magnet trough, there is touch induction needle (61) on the circuit board (6), there is induction part (62) at that position corresponding to the said touch induction needle (61), and there is shielding layer (8) at the exterior of the said main bracket (4) and auxiliary bracket (5).

5. The active capacitive pen with magnetic rail cap said according to claim 4, **characterized in that** the said magnet set (12) includes magnet a(121) and magnet b(122), the said magnet a(121) is set into the end groove of the main bracket (4), the two said magnets b(122) are respectively set into the root of the guide rail part(42), and they are located in the same horizontal plane as magnet a(121) but their magnetism repels each other.

6. The active capacitive pen with magnetic rail cap said according to claim 1, **characterized in that** there is buffer cushion between the protecting crust (45) and guide rail part (42), and crust cap (46) covers the exterior of the said guide rail part (42).

7. The active capacitive pen with magnetic rail cap said according to claim 4, **characterized in that** there is battery in the said battery trough (10), there is rectangular hole below the said battery trough (10) and there is iron block (11) in the rectangular hole.
